# EUROPÄISCHE PATENTSCHRIFT

(11) **EP 0 422 489 B1**
(45) Veröffentlichungstag und Bekanntmachung des Hinweises auf die Patenterteilung: **07.07.1993**
(21) Anmeldenummer: 90118922.5
(22) Anmeldetag: 04.10.1990
(51) Int. Cl.: B62D 33/06

(54) **Kraftfahrzeug mit kippbarer Kabine und Kippvorrichtung**
Motor vehicle with tiltable cab and tilting device
Véhicule à moteur avec cabine basculante et dispositif de basculement

(30) Priorität: 11.10.1989 DE 3933935
(43) Veröffentlichungstag der Anmeldung: 17.04.1991
(73) Patentinhaber: DEERE & COMPANY, Moline, Illinois 61265 (US)
(72) Erfinder: Kuhlmann, Ludger, W-6336 Solms-Albshausen (DE); Friederich, Dieter, W-6800 Mannheim 1 (DE); Ressel, Peter, W-6852 Wallstadt (DE)
(74) Vertreter: Feldmann, Bernhard

(56) Entgegenhaltungen:
- EP-A- 0 277 097
- DE-A- 2 504 713
- DE-A- 2 841 575
- FR-A- 2 530 605

## Beschreibung

Die Erfindung betrifft ein Kraftfahrzeug, insbesondere ein land- und/oder bauwirtschaftlich nutzbares Kraftfahrzeug, z. B. einen Ackerschlepper mit einer im Bereich über der Hinterachse angeordneten Fahrzeugkabine, deren unterer Bereich teilweise zwischen den Hinterrädern liegt und wenigstens einen Teil des Antriebsstranges abdeckt.

Für die Durchführung von Wartungs-, Reparatur- und Reinigungsarbeiten ist ein guter Zugang zu den unterhalb der Fahrzeugkabine liegenden Komponenten des Antriebsstranges, des Bremssystems, sowie weiterer mechanischer, elektrischer und hydraulischer Einrichtungen von großer Bedeutung. Ein Zugang von oben wird durch die Fahrzeugkabine behindert. Ein Zugang von der Seite aus kann durch Rahmenteile oder dergleichen verbaut sein. Es ist auch ungenügend, wenn bei den Arbeiten an den Komponenten ein Kran eingesetzt werden soll. Ein Zugang von unten ist recht beschwerlich und für viele auszuführenden Arbeiten nicht ausreichend.

Der Zugang zu den unter der Fahrzeugkabine liegenden Komponenten wird beispielsweise bei Ackerschleppern der eingangs genannten Art durch Abheben der Fahrzeugkabine vom Fahrzeugrumpf erreicht. Hierfür müssen zunächst alle Verbindungen zwischen dem Fahrzeugrumpf (damit ist hier das gesamte Fahrzeug ohne die Fahrzeugkabine gemeint) und der Fahrzeugkabine gelöst werden. Unter den Begriff Verbindungen fallen hier sowohl die Verschraubungen, mittels derer die Fahrzeugkabine am Fahrzeugrumpf befestigbar ist, als auch alle Kabel, Seilzüge, Leitungen und dergleichen, durch die Steuerbefehle und andere Signale zwischen Fahrzeugkabine und dem übrigen Fahrzeug ausgetauscht werden. Das Lösen der Verbindungen erfordert häufig Spezialwerkzeuge.

Nach dem Lösen der Verbindungen kann die Fahrzeugkabine beispielsweise unter Zuhilfenahme eines Kranes abgehoben werden. Dabei wird z. B. ein Kranhaken in eine im Kabinendachrahmen befestigte Aufhängeöse eingehängt. Die Demontage und spätere Wiedermontage der Fahrzeugkabine ist sehr zeitaufwendig und kann zwei Arbeitstage in Anspruch nehmen. Ferner sind diese Arbeiten nur dort möglich, wo ein Kran zur Verfügung steht. Dieser ist im allgemeinen nur in relativ großen und hohen Hallen verfügbar.

Die mit der Erfindung zu lösende Aufgabe wird darin gesehen, ein Fahrzeug der eingangs genannten Art derart auszubilden, daß ein ausreichender Zugang für die Wartung, die Reparatur, den Austausch und die Reinigung der unter der Fahrzeugkabine liegenden Komponenten, insbesondere Teile des Antriebsstranges, ohne große Schwierigkeiten und mit geringem Zeitaufwand herstellbar ist. Hierbei sollen möglichst wenige Spezialwerkzeuge erforderlich sein.

Die Aufgabe wird erfindungsgemäß dadurch gelöst, daß die Fahrzeugkabine nach Entfernen eines Hinterrades seitlich um eine in etwa parallel zur Fahrzeuglängsachse verlaufenden Kippachse soweit kippbar ist, daß eine bequeme Zugänglichkeit der unterhalb der Fahrzeugkabine liegenden Komponenten möglich ist.

Das Verkippen von Fahrzeugkabinen ist zwar grundsätzlich bekannt. Beispielsweise können bei vielen Lastkraftwagen die Fahrzeugkabinen nach vorn gekippt werden. Ein Verkippen der Fahrzeugkabine nach vorn ist jedoch bei einer Reihe von Fahrzeugen, wie beispielsweise bei Ackerschleppern mit einer über den Hinterrädern montierten Kabine, nicht oder nur in begrenztem Ausmaß möglich.

Ferner ist durch die DE-A-28 41 575 ein Kraftfahrzeug mit einer seitlich kippbar gelagerten Fahrzeugkabine bekannt geworden. Hierbei ist die Fahrzeugkabine im Bereich der relativ kleinen Vorderräder über der Brennkraftmaschine angeordnet. Der Fahrzeugkabinenboden liegt über der Oberkannte der Räder, so daß die Räder beim Kippen nicht hinderlich sind. Zum Kippen ist zwischen einem Rahmenteil des Fahrzeuges und der Fahrzeugkabine eine Hebevorrichtung, beispielsweise ein Wagenheber mit scherenförmigen Hubgliedern, vorgesehen. Diese seitlich kippbare Fahrzeugkabine ist bei Fahrzeugen der eingangs genannten Art nicht anwendbar, da bei einem ausreichenden seitlichen Verkippen die Hinterräder im Kippbereich der Kabine liegen würden. Ferner ist der Kippwinkel bei der bekannten Lösung relativ klein, was dort vertretbar ist, da einerseits eine Kippung zu beiden Seiten möglich ist und andererseits lediglich ein Verkippen für Wartungszwecke, nicht aber z. B. für den Austausch von Getriebeaggregaten erfolgen soll. Das Verkippen der Fahrerkabine wird in der DE-A-28 41 575 relativ pauschal abgehandelt. Es wird beispielsweise nicht erwähnt, wie beim Verkippen mit den Verbindungselementen zwischen den Bedienungselementen in der Fahrerkabine und den am Fahrzeugrumpf angeordneten Aggregaten des Fahrzeuges verfahren werden soll.

Erfindungsgemäß läßt sich die Fahrzeugkabine um einen Winkel verkippen, der einen maximalen Wert zwischen 60° und 110°, vorzugsweise etwa 90°, einnimmt. Der maximale Kippwinkel ist beispielsweise bei einem Ackerschlepper dadurch begrenzt, daß vermieden werden muß, daß die Fahrzeugkabinenseitenwand am Radtrichter des Hinterrades anstößt.

Vorzugsweise verläuft die Kippachse in etwa entlang einer der beiden seitlichen unteren Seitenkanten der Fahrzeugkabine. Sie wird dabei in zweckmäßiger Weise durch wenigstens zwei Scharniere definiert, die jeweils den Fahrzeugrumpf mit der Kabine verbinden. Der Fahrzeugrumpf ist z. B. ein Fahrzeuggrundrahmen, der die Antriebskomponenten trägt. Bei fehlendem Grundrahmen können die Scharniere an einem Hilfsrahmen oder bei Blockbauweise des Antriebes an einem Getriebegehäuseteil befestigt sein.

Um die Übertragung von Erschütterungen und Geräuschen vom Fahrzeugrumpf auf die Fahrzeugkabine zu mindern, enthalten die Kabinenlager in der Regel Dämpfungsglieder, die sich beispielsweise an den vier Ecken des Kabinenbodens befinden. Der Ort dieser Dämpfungsglieder eignet sich auch für die Anbringung der Scharniere, wobei jeweils beide Elemente gemeinsam montierbar sind.

Um die Wirkung der Dämpfungsglieder für den Fahrbetrieb nicht zu beeinträchtigen, weisen die Scharniere vorzugsweise je einen Scharnierbolzen auf, der nur für das Verkippen der Kabine eingesteckt wird und die beiden Scharnierhälften gelenkig miteinander verbindet.

Die Montagezeit beim Verkippen der Fahrzeugkabine läßt sich erfindungsgemäß dadurch erheblich reduzieren, daß die Übertragungselemente, die die Bedienungselemente in der Fahrzeugkabine mit den Aggregaten am Fahrzeugrumpf verbinden, flexibel oder so beweglich ausgebildet sind, daß ein Verkippen ohne Auftrennung der Übertragungselemente möglich ist. Damit bleiben alle Verbindungen, die das Betriebssystem Fahrzeug-Kabine betreffen, wie Schalteinrichtungen (Seilzüge), Hydrauliksysteme (Lenkung, Bremsen, Steuergeräte), Lüftungs-, Heizungs- und Klimaanlage und die elektrischen Systeme (Kabelbäume) bestehen. Das Fahrzeug bleibt voll funktionsfähig, sieht man einmal davon ab, daß es wegen des einen demontierten Rades nicht gefahren werden kann. Damit ist das Fahrzeug auch bei gekippter Fahrzeugkabine betriebs- und überprüffähig.

Es ist von Vorteil, die zwischen Fahrzeugkabine und Fahrzeugrumpf verlaufenden Übertragungselemente so zu verlegen, daß sie in etwa die Kippachse kreuzen oder an dieser entlanglaufen. Hierdurch lassen sich längere Leitungsschlaufen bei den hydraulischen Leitungen (Schläuche), den elektrischen Leitungen (Kabelbäume), den Schaltübertragungsteilen (Bodenzügen) und den Heizungs- und Klimaleitungen, die beim Verkippen abgerollt werden, vermeiden. Die Übertragungselemente werden bei dieser Anordnung während des Kippens nur wenig bewegt und beansprucht.

Da eine Reihe von Bedienungsorganen, wie die Bremspedale, die Schalthebel und die Bedienungshebel für die Anhängekupplung und hydraulische Zusatzkomponenten, üblicherweise auf der rechten Seite der Kabine angeordnet sind, ist es von besonderem Vorteil, wenn die Kippachse auf der rechten Fahrzeugachse verläuft. Hierdurch lassen sich die Übertragungselemente zwischen Kabine und Fahrzeugrumpf relativ kurz und einfach ausführen.

Für ein Verkippen der Fahrzeugkabine wird zunächst das auf der Seite der Kippachse liegende Hinterrad unterstützt und abgebaut. Dann werden die Scharnierbolzen in die Scharnierteile eingesteckt und die Kabinenbefestigungen im Bereich der Kabinenlager gelöst. Jetzt kann ohne Trennung von Leitungen und dergleichen die Kabine seitlich gekippt werden. Beim Zurückkippen wird in umgekehrter Reihenfolge verfahren.

Das Kippen der Kabine kann unter Zuhilfenahme eines Werkstattkranes erfolgen. Hierzu kann eine im Kabinendachrahmen verankerte Aufhängeöse benutzt werden, in die der Kranhaken einhängbar ist.

Da es jedoch von großem Nutzen ist, wenn sich die Fahrzeugkabine auch unabhängig von einem Werkstattkran, z. B. außerhalb von Werkstätten kippen läßt, um Reparatur- oder Wartungsarbeiten durchführen zu können, wird durch die Erfindung eine mechanische Kippvorrichtung vorgeschlagen, die an dem Fahrzeug montierbar ist.

Erfindungsgemäß besteht die Kippvorrichtung aus einer unter der Fahrzeugkabine, quer zur Fahrzeuglängsachse am Fahrzeugrumpf starr befestigbaren Spindelanordnung, einem an der Fahrzeugkabine befestigbaren, über die Kippachse nach außen hervorstehenden Teil sowie einem Verbindungsteil, welches das freie Ende des hervorstehenden Teiles und die Spindelmutter gelenkig miteinander verbindet.

Vorzugsweise ist die Kippvorrichtung bezüglich der Fahrzeuglängsachse am vorderen Kabinenende auf der Höhe des vorderen Kippscharnieres am Fahrzeug befestigbar. Dies gewährleistet einen stabilen Angriffspunkt zur Übertragung der Kippkräfte.

Die Kippanordnung kann relativ klein und leicht ausgeführt werden, so daß sie bequem in einem mobilen Werkzeugwagen mitgeführt werden kann. Es ist von besonderem Vorteil, wenn die Kippvorrichtung Teile enthält, die zur üblichen Gebrauchsausrüstung des Fahrzeuges gehören. So kann zweckmäßigerweise der Oberlenker eines Fahrzeuges mit Dreipunktanhängevorrichtung als Verbindungsteil dienen. Da der Oberlenker in der Regel längenverstellbar ausgebildet ist, steht hiermit ein Verbindungsteil zur Verfügung, dessen Länge sich den Erfordernissen anpassen läßt.

Das an der Kabine befestigbare, über die Kippachse hervorstehende Teil dient als Hebelarm für das Kippen. Es handelt sich dabei vorzugsweise um eine etwa horizontal nach außen über die Fahrzeugkabine hervorstehende Strebe. Diese besteht zweckmäßigerweise im wesentlichen aus einem Vierkanthohlprofil, welches in den als Vierkanthohlprofil ausgebildeten unteren Kabinenquerholm einschiebbar ist. Die Strebe kann ferner einen Anschlag oder Wulst aufweisen, der die Einstecklänge definiert. Eine derartige Strebe läßt sich rasch montieren und ist betriebssicher. Sie kann vorzugsweise durch einen Bolzen, der durch eine Bohrung im Kabinenquerholm und eine entsprechende Bohrung in der Strebe einsteckbar ist, gegen Herausrutschen gesichert werden.

Es erleichtert die Handhabung der Kippvorrichtung, wenn diese einen Anschlag aufweist, der den Kippvorgang begrenzt. Hierfür ist es zweckmäßig, die Lage und Länge des Spindelgehäuses und des vorstehenden Teiles derart zu wählen, daß bei Erreichen des maximal zulässigen Kippwinkels das vorstehende Teil am Spindelgehäuse anschlägt.

Vorzugsweise enthält die Spindelanordnung ein U-förmiges Gehäuse, das wenigstens zwei Halteorgane zur Befestigung am Fahrzeugrumpf, z. B. am Fahrzeugrahmen oder Hilfsrahmen oder an einer geeigneten, am Getriebegehäuse befestigten Halterung, trägt. Ein erstes Halteorgan kann an seinem freien Ende eine maulförmige Führung enthalten, die eine am Fahrzeugrumpf horizontal hervorstehenden Lasche umgreifen kann. Die Festlegung dieses Halteorganes an dem Fahrzeugrumpf erfolgt durch einen Verbindungsbolzen, der in miteinander korrespondierende Bohrungen in der Führung und der Lasche einsteckbar ist. Ein zweites Halteorgan kann aus einer mit dem Spindelgehäuse verschweißten U-förmigen Schiene bestehen, deren freies Ende mit dem Fahrzeugrumpf verschraubbar ist. Diese Ausbildung erlaubt eine bequeme Montage, indem zunächst die maulförmige Führung auf die hervorstehende Lasche geschoben wird, wodurch die Spindelanordnung vorläufig einseitig von der Lasche gehalten wird. Dann wird das zweite Halteorgan am Fahrzeugrumpf festgeschraubt und schließlich durch Einstecken des Bolzens in die Bohrungen des ersten Halteorganes sowie der Lasche und gegebenenfalls durch Festschrauben des Bolzens, das erste Halteorgan endgültig am Fahrzeugrumpf fixiert. Die Halteorgane können relativ kurz ausgebildet sein, so daß die Kippvorrichtung relativ klein und kompakt ausgebildet ist und eine hohe Eigenstabilität aufweist.

Eine weitere Erhöhung der Stabilität der Anordnung wird vorzugsweise dadurch erreicht, daß die Spindelanordnung eine nach oben weisende Stützstrebe trägt, deren oberes freies Ende am Fahrzeugkabinenrahmen in der Nähe eines Scharnieres festlegbar ist. Um Toleranzen und Setzungen ausgleichen zu können, läßt sich die wirksame Länge der Stützstrebe einstellen.

Zur Befestigung der Stützstrebe am Fahrzeugkabinenrahmen weist das obere Ende der Stützstrebe zweckmäßigerweise ein senkrecht ausgerichtetes Gewinde auf, in das ein Bolzen einschraubbar ist, der sich am Fahrzeugkabinenrahmen abstützt. Die Arretierung des zwischen Stützstrebe und Fahrzeugkabinenrahmen angeordneten Bolzens kann durch eine Querschraube erfolgen.

Um die Betätigung der Kippvorrichtung von einem sicheren Ort, an dem auch ausreichend Platz zur Verfügung steht, vornehmen zu können, trägt die Spindelanordnung eine auf der der Kippachse gegenüberliegenden Seite des Fahrzeuges eine Handkurbel. Das mit der Handkurbel versehene Ende der Spindelanordnung steht auf dieser Seite über den Fahrzeugrumpf hervor, so daß vom Ort der Betätigung aus eine gute Beobachtbarkeit des Kippvorganges gegeben ist.

Durch die beanspruchte Kippvorrichtung läßt sich die Fahrzeugkabine in jeder Lage des Kippvorganges sicher führen und halten, so daß der Kippvorgang jederzeit unterbrochen werden kann, ohne daß Personen oder Gegenstände gefährdet werden.

Weitere vorteilhafte Ausgestaltungen und Weiterbildungen der Erfindung gehen aus den Unteransprüchen hervor.

Anhand der Zeichnung, die Ausführungsbeispiele der Erfindung zeigt, sollen die Erfindung sowie weitere Vorteile und vorteilhafte Weiterbildungen und Ausgestaltungen der Erfindung näher beschrieben und erläutert werden.

Es zeigt:
- Fig. 1: den hinteren Teil eines Ackerschleppers mit seitlich nach rechts gekippter Fahrzeugkabine in perspektivischer Darstellung,
- Fig. 2: die Vorderansicht eines Ackerschleppers mit seitlich gekippter Fahrzeugkabine und
- Fig. 3: eine perspektivische Teilansicht des hinteren Teiles eines Ackerschleppers mit Kippvorrichtung.

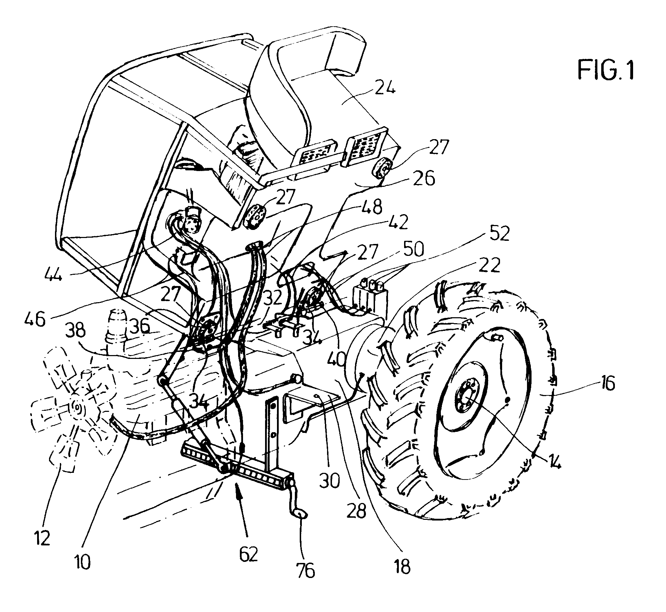

Aus Figur 1 geht der hintere Teil eines Ackerschleppers hervor. Der Antriebsmotor 10 mit seinem Lüfterrad 12 ist lediglich durch unterbrochene Linien angedeutet. An die Antriebsmaschine 10 schließt sich der Antriebsstrang des Ackerschleppers an, der aus der Motorkupplung, einem Gruppen- und einem Schaltgetriebe, einem Hinterradachsdifferential, der Hinterachse 14 und den Hinterrädern 16 besteht. Das rechte Hinterrad ist demontiert. Der Antriebsstrang befindet sich in einem oder mehreren Getriebegehäusen 18 sowie den beiden Hinterradtrichtern 20, 22. Über dem Antriebsstrang und zwischen den beiden Hinterrädern ist gewöhnlich die Fahrzeugkabine 24 gelagert. Dabei liegt in Normalstellung der Kabine der Kabinenboden 26 deutlich tiefer, als die Oberkante der Hinterräder 16. Die Fahrzeugkabine 24 ruht dabei auf vier Kabinenlagern 27, die an den vier Ecken des Kabinenbodens 26 befestigt sind und Dämpfungsglieder enthalten. Die Kabinenlager 27 liegen bei der normalen Stellung der Fahrzeugkabine 24 auf winkelförmig ausgebildeten, am Getriebegehäuse 18 befestigten Stützlagern 28 auf. In den Stützlagern 28 befinden sich Bohrungen 30, durch die Befestigungsbolzen zur Verschraubung der Fahrzeugkabine 24 steckbar sind. In der Zeichnung ist die Kabine jedoch nicht in ihrer normalen, sondern in einer gekippten Lage dargestellt. Die Kippachse 32 verläuft auf der rechten Fahrzeugseite in etwa parallel zur Fahrzeuglängsachse. Die Kippachse 32 wird durch zwei Scharniere 34 gebildet, die jeweils aus zwei Scharnierteilen 36, 38 und einem Scharnierbolzen 40 bestehen. Das jeweils eine Scharnierteil 36 ist am Kabinenboden 26 und das jeweils andere Scharnierteil 38 ist am zugehörigen Stützlager 28 befestigt. Um die Dämpfwirkung der Dämpfungsglieder in den Kabinenlagern 27 nicht zu beeinträchtigen, werden die Scharnierbolzen 40 in die zugehörigen Öffnungen der Scharnierteile 36, 38 nur dann eingesteckt, wenn ein Verschwenken der Fahrzeugkabine 24 beabsichtigt ist.

Bei der Fahrzeugkabine 24 handelt es sich um eine komplett vormontierbare Komponente, die über flexible Übertragungselemente mit dem übrigen Fahrzeug (Fahrzeugrumpf) in Verbindung steht. Die Übertragungselemente verbinden die Anzeige- und Bedienungseinrichtungen in der Fahrzeugkabine 24 mit den entsprechenden Aggregaten am Fahrzeugrumpf. Es handelt sich insbesondere um Schaltzüge 42 zwischen den Schalthebeln in der Fahrzeugkabine 24 und den verschiedenen Getriebeteilen, um Hydraulikleitungen 44, 46, der hydraulischen Lenkung und der hydraulischen Bremsanlage, um Heizungs- und Klimaleitungen 48, um Steuerleitungen 50 zur Steuerung von Zusatzsteuergeräten 52, wie beispielsweise hydraulischen Steckdosen, und um zu Kabelbäumen zusammengefaßten elektrischen Leitungen, die nicht näher dargestellt wurden und der Übertragung von elektrischen Signalen zwischen Fahrzeugkabine 24 und Fahrzeugrumpf dienen. Alle genannten Übertragungselemente sind so verlegt, daß sie in etwa die Kippachse 32 schneiden oder teilweise an dieser entlanglaufen. Hierdurch werden beim Verkippen der Fahrzeugkabine 24 auf die Übertragungselemente keine oder nur geringe Zugkräfte ausgeübt. Die Übertragungselemente werden beim Verkippen im wesentlichen lediglich etwas verbogen oder verdreht.

Um die Übertragungselemente kurz halten zu können, sind die zugehörigen Betätigungseinrichtungen auf der rechten Seite der Fahrzeugkabine 24 angeordnet.

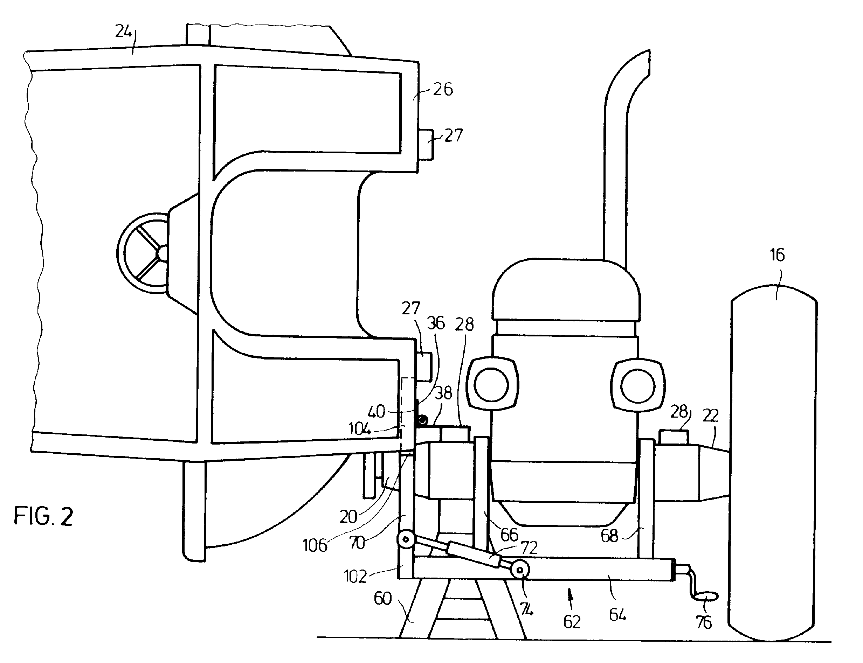

Aus Figur 2 geht hervor, daß das rechte Rad des Ackerschleppers demontiert ist. Um den Ackerschlepper abzustützen, ist unter den rechten Radtrichter 20 ein Holzbock 60 gestellt. Die Fahrzeugkabine 24 ist um etwa 90° aus ihrer Betriebsstellung gekippt. Unterhalb des Fahrzeuges ist eine Kippvorrichtung 62 montiert. Diese besteht im wesentlichen aus einer Spindelanordnung 64, welche durch zwei Streben 66, 68 am Fahrzeugrumpf (beispielsweise am Getriebegehäuse) befestigt ist, ein über die Kabinenseitenwand herausragendes Teil 70 und ein Verbindungsteil 72. Das Verbindungsteil 72 greift mit einem Ende in etwa am Ende des von der Kabinenwand hervorstehenden Teiles 70 und mit seinem anderen Ende an der Spindelmutter 74 der Spindelanordnung 64 an. Die beiden Verbindungsstellen sind gelenkig ausgeführt.

Die Spindelanordnung 64 steht auf der der Kippachse 32 gegenüberliegenden Seite des Ackerschleppers über den Fahrzeugrumpf hervor und trägt hier eine Handkurbel 76. Von dem Ort der Handkurbel 76 aus ist der Kippvorgang gut beobachtbar, ohne daß sich die Bedienungsperson im Kippbereich befindet und Gefahren ausgesetzt wäre.

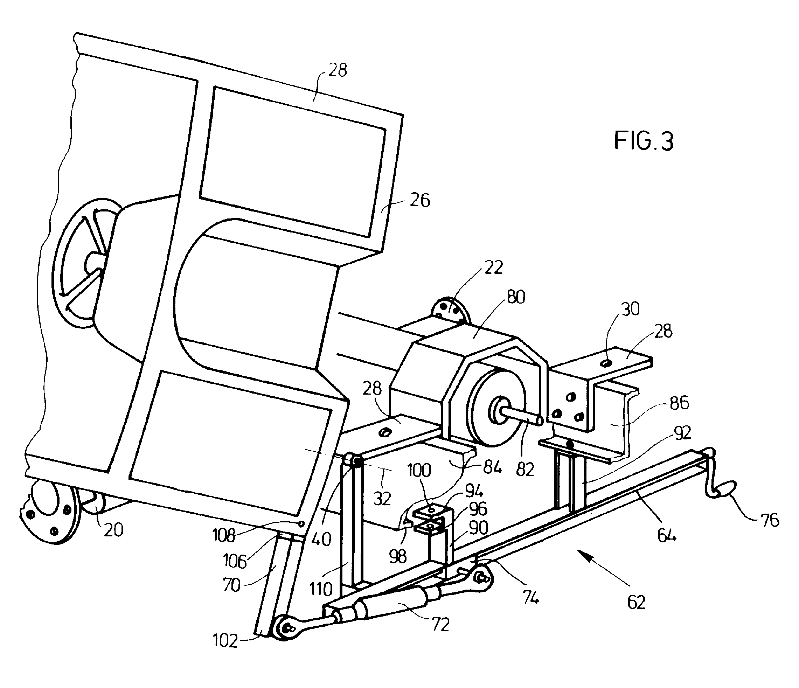

Um die erfindungsgemäße Kippvorrichtung 62 deutlich darzustellen, wurden in Figur 3 alle für die Erfindung unwesentlichen Teile des Schlepperrumpfes weggelassen. Es ist lediglich das Getriebegehäuse 80 mit den angedeuteten Hinterradtrichtern 20, 22 erkennbar. Aus dem Getriebegehäuse 80 ragt die Getriebeeingangswelle 82 heraus, durch die das Getriebe mit der Antriebsmaschine in Verbindung steht. Auch das linke Hinterrad 16 wurde der Übersichtlichkeit halber in Figur 3 nicht mitgezeichnet.

Das Getriebegehäuse 80 liegt zwischen zwei Hilfsrahmenteilen 84, 86. An diesen sind die vorderen Stützlager 28 befestigt. Die hinteren Stützlager können beispielsweise an den Hinterradtrichtern 20, 22 oder an einem hinteren Gehäuseteil des Ackerschleppers befestigt sein.

Unterhalb der Rahmenteile 84, 86 ist quer zur Schlepperlängsrichtung die Kippvorrichtung 62 montiert, die im wesentlichen aus der Spindelanordnung 64 mit Spindelmutter 74, einem über die Kabinenseitenwand hinausragenden Teil 70 sowie einem Verbindungsteil 72 besteht. Die Spindelanordnung 64 ist als U-förmiges Gehäuse ausgebildet, das die Spindel aufnimmt. An dem Spindelgehäuse sind zwei Halteorgane 90, 92 befestigt, beispielsweise angeschweißt. Das erste Halteorgan 90 weist an seinem freien, nach oben weisenden Ende zwei horizontal parallel zueinander verlaufende Schenkel 94, 96 auf, die als maulförmige Führung eine horizontal ausgerichtete Lasche 98 des Hilfsrahmenteiles 84 aufnehmen. Zur Festlegung des ersten Halteorganes 90 an dem Hilfsrahmen 84 kann ein nicht dargestellter Verbindungsbolzen dienen, der durch entsprechende Bohrungen 100 steckbar ist.

Das zweite Halteorgan 92 besteht aus einer U-förmigen Schiene, deren oberes, freies Ende mit dem Hilfsrahmenteil 86 verschraubbar ist. Bei der Montage der Spindelanordnung 64 unter dem Hilfsrahmenteil 84 wird zunächst die maulförmige Führung des ersten Halteorganes 90 über die Lasche 98 geschoben. Dann wird das zweite Halteorgan 92 mit dem Hilfsrahmenteil 86 verschraubt. Schließlich wird die Spindelanordnung 64 so ausgerichtet, daß sie senkrecht zur Fahrzeuglängsachse liegt, worauf der Verbindungsbolzen in die Bohrungen 100 einsteckbar und gegebenenfalls verschraubbar ist.

Auf der einen Seite trägt die Spindelanordnung 64 eine Handkurbel 76. Auf der anderen Seite ist die Spindelanordnung 64 so lang ausgebildet, daß sie als Anschlag für das an der Kabinenseitenwand befestigte Teil 70 dient. Wird die Fahrzeugkabine 24 um die Kippachse 32 durch Drehen der Handkurbel 76 und damit durch Verschiebung der Spindelmutter 74 weiter heruntergekippt, als dies in Figur 3 dargestellt ist, so stößt das freie Ende 102 des Teiles 70 gegen die der Handkurbel 76 gegenüberliegende Stirnseite der Spindelanordnung 64 und begrenzt den Kippwinkel auf etwa 90°, wie die Figur 2 zeigt.

Als Verbindungsteil 72 kann der Oberlenker einer Dreipunktanhängevorrichtung verwendet werden. Dieser ist an dem freien Ende 102 des Teiles 70 und der Spindelmutter 74 gelenkig befestigt. Die Länge des Oberlenkers 72 läßt sich durch Verdrehen seines mittleren Bereiches einstellen.

Bei dem Teil 70 handelt es sich um ein Vierkantrohr, welches in eine entsprechende Ausnehmung (siehe 104 in Figur 2) im unteren Kabinenrahmen einsteckbar ist. Zur Begrenzung der Einstecklänge weist das Vierkant-Teil 70 einen Bund 106 auf. Ferner ist in dem Teil 70 und im Kabinenrahmen je eine Bohrung vorgesehen, durch die bei eingestecktem Teil 70 ein Befestigungsbolzen 108 einsteckbar ist, durch den ein Herausfallen des Teiles 70 aus dem Kabinenrahmen verhindert wird.

Seitlich an dem U-förmigen Spindelgehäuse ist eine nach oben weisende Stützstrebe 110 befestigt. Das obere Ende der Stützstrebe 110 steht mit dem Fahrzeugkabinenrahmen gelenkig in Verbindung. Die Verbindungsstelle liegt in der Nähe des vorderen rechten Scharnieres 34. Die Länge der Stützstrebe 110 ist dadurch einstellbar, daß sie an ihrem oberen Ende ein senkrecht ausgerichtetes Gewinde aufweist, in das ein sich am Fahrzeugkabinenrahmen abstützender Bolzen einschraubbar ist. Durch Einstellung der Stützstrebenlänge lassen sich Toleranzen und Setzungen ausgleichen.

Bezüglich der Längsachse des Ackerschleppers ist die Kippvorrichtung 62 in Höhe des vorderen Kippscharnieres 34 am Fahrzeug befestigt. Die Verwendung einer Stützstrebe 110 ist zwar prinzipiell nicht erforderlich, sie erhöht jedoch die Stabilität der Kippvorrichtung 62, so daß die übrigen Bauteile geringere Kräfte aufnehmen müssen und entsprechend schwächer ausgelegt werden können.

Beim Verkippen der Fahrzeugkabine 24 wird wie folgt verfahren:

Das nach außen hervorstehende Teil 70 wird in die entsprechende Öffnung des Kabinenrahmens gesteckt und durch einen Bolzen 108 gesichert. Die Spindelanordnung 64 wird, wie bereits beschrieben, an den Hilfsrahmenteilen 84 und 86 befestigt. Ferner wird das obere Ende der Stützstrebe 110 am Fahrzeugkabinenrahmen in der Nähe eines Scharnieres 34 festgelegt. Die wirksame Länge der Stützstrebe 110 läßt sich dabei auf die gegebenen Erfordernisse einstellen. Nun wird das Verbindungsteil 72 zwischen das freie Ende 102 des hervorstehenden Teiles 70 und der Spindelmutter 74 eingefügt. Dazu ist die Spindelmutter 74 durch Verdrehen der Handkurbel 76 gegebenenfalls bis zum äußeren, der Handkurbel 76 gegenüberliegenden Ende der Spindelanordnung 64 zu verschieben. Das Verbindungsteil 72 weist an jedem Ende eine Öse auf, die über entsprechende Bolzen in dem freien Ende 102 und der Spindelmutter 74 geschoben wird. Durch Splinte läßt sich das Verbindungsteil 72 an den Bolzen sichern. Nachdem die Kippvorrichtung 62 am Fahrzeug montiert ist, wird die hintere rechte Fahrzeugseite etwas angehoben und durch einen Holzbock 60 unterstützt. Nun läßt sich das rechte Hinterrad demontieren. Hierauf werden die Scharnierbolzen in die Scharniere 34 eingesteckt und die Schrauben gelöst, mittels derer die Kabinenlager 27 auf den Stützlagern 28 des Schlepperrumpfes befestigt sind.

Jetzt kann ein Verkippen der Fahrzeugkabine 24 durch Verdrehen der Handkurbel 76 erfolgen. Alle weiteren Verbindungen zwischen Fahrzeugrumpf und Kabine 24 (elektrische und hydraulische Leitungen sowie Seilzüge) sind elastisch und lassen ein Verkippen zu. Durch Verdrehen der Handkurbel 76 bewegt sich die Spindelmutter 64 zur linken Fahrzeugseite. Dabei zieht das Verbindungsteil 72 das hervorstehende Teil 70 nach unten und verschwenkt dieses mit der Fahrzeugkabine 24 um die Kippachse 32. Das Verkippen läßt sich so lange fortsetzen, bis das freie Ende 102 des hervorstehenden Teiles 70 gegen die rechtsseitige Stirnseite der Spindelanordnung 64 stößt und eine weitere Bewegung begrenzt.

Das Zurückkippen und Aufsetzen der Fahrzeugkabine auf dem Schlepperrumpf erfolgt in umgekehrter Reihenfolge.

## Patentansprüche

1. Kraftfahrzeug, insbesondere land- und/oder bauwirtschaftlich nutzbares Kraftfahrzeug, mit einer im Bereich über der Hinterachse (14) angeordneten Fahrzeugkabine (24), deren unterer Bereich teilweise zwischen den Hinterrädern (16) liegt und wenigstens einen Teil des Antriebsstranges abdeckt, dadurch gekennzeichnet, daß die Fahrzeugkabine (24) nach Entfernen eines Hinterrades zur Seite des entfernten Hinterrades um eine in etwa parallel zur Fahrzeuglängsachse verlaufenden Kippachse (32) kippbar ist.

2. Kraftfahrzeug nach Anspruch 1, dadurch gekennzeichnet, daß der maximale Kippwinkel, um den die Fahrzeugkabine (24) aus ihrer Betriebsstellung kippbar ist, einen Wert zwischen 60° und 110°, vorzugsweise 90° einnimmt.

3. Kraftfahrzeug nach Anspruch 1 oder 2, dadurch gekennzeichnet, daß die Kippachse (32) in etwa entlang einer der beiden seitlichen unteren Seitenkanten der Fahrzeugkabine (24) verläuft und vorzugsweise durch wenigstens zwei Scharniere (34) definiert wird, die jeweils den Fahrzeugrumpf mit der Fahrzeugkabine (24) verbinden.

4. Kraftfahrzeug nach Anspruch 3, dadurch gekennzeichnet, daß sich die Scharniere (34) im Bereich der zwischen dem Fahrzeugrumpf und der Fahrzeugkabine (24) angeordneten Dämpfungsglieder (27) befinden und vorzugsweise je einen für den Fahrbetrieb entfernbaren Scharnierbolzen (40) aufweisen.

5. Kraftfahrzeug nach einem der Ansprüche 1 bis 4, dadurch gekennzeichnet, daß die Fahrzeuglenkung hydraulisch durch flexible Schläuche (44) übertragen wird.

6. Kraftfahrzeug nach einem der Ansprüche 1 bis 5, dadurch gekennzeichnet, daß die Übertragungselemente, die die Anzeige- und Bedienungselemente in der Fahrzeugkabine (24) mit den Aggregaten am Fahrzeugrumpf verbinden, flexibel oder so beweglich ausgebildet sind, daß ein Verkippen ohne Auftrennung der Übertragungselemente möglich ist, und daß die Übertragungselemente zwischen dem Fahrzeugrumpf und der Fahrzeugkabine (24) in etwa über die Kippachse (32) verlaufen.

7. Kraftfahrzeug nach einem der Ansprüche 1 bis 6, dadurch gekennzeichnet, daß die Kippachse (32) auf der rechten Fahrzeugseite verläuft.

8. Kraftfahrzeug nach einem der Ansprüche 1 bis 7, dadurch gekennzeichnet, daß am Fahrzeug eine Kippvorrichtung (62) nach einem der Ansprüche 9 bis 19 montierbar ist.

9. Kippvorrichtung zum Kippen der Fahrzeugkabine, insbesondere für Fahrzeuge gemäß einem der Ansprüche 1 bis 8, dadurch gekennzeichnet, daß eine unter der Fahrzeugkabine (24), quer zur Fahrzeuglängsachse am Fahrzeugrumpf starr befestigbare Spindelanordnung (64), ein an der Fahrzeugkabine (24) befestigbares über die Kippachse (32) nach außen hervorstehendes Teil (70) sowie ein Verbindungsteil (72) vorgesehen sind, wobei das Verbindungsteil (72) das freie Ende (102) des hervorstehenden Teiles (70) und die Spindelmutter (74) gelenkig miteinander verbindet.

10. Kippvorrichtung nach Anspruch 9, dadurch gekennzeichnet, daß diese bezüglich der Fahrzeuglängsachse am vorderen Kabinenende in etwa auf der Höhe des vorderen Kippscharniers (34) am Fahrzeug befestigbar ist.

11. Kippvorrichtung nach Anspruch 9 oder 10, dadurch gekennzeichnet, daß als Verbindungsteil (72) ein zur üblichen Gebrauchsausrüstung des Fahrzeuges gehörendes Teil, vorzugsweise der Oberlenker eines Fahrzeuges mit Dreipunktanhängevorrichtung, vorgesehen ist.

12. Kippvorrichtung nach einem der Ansprüche 9 bis 11, dadurch gekennzeichnet, daß das hervorstehende Teil (70) eine seitlich an der Fahrzeugkabine (24) montierbare, in etwa horizontal nach außen über die Fahrzeugkabine (24) hervorstehende Strebe ist, die ein Außenprofil aufweist, das in eine entsprechend profilierte Ausnehmung im Kabinenrahmen einsteckbar ist.

13. Kippvorrichtung nach Anspruch 14, dadurch gekennzeichnet, daß ein Bolzen (108) vorgesehen ist, der durch eine Bohrung im Kabinenquerholm in eine entsprechende Bohrung in der Strebe (70) einsteckbar ist, um die Strebe (70) an der Fahrzeugkabine (24) festzulegen.

14. Kippvorrichtung nach einem der Ansprüche 9 bis 13, dadurch gekennzeichnet, daß Lage und Länge von Spindelgehäuse (64) und vorstehendem Teil (70) derart gewählt werden, daß bei Erreichen des maximal zulässigen Kippwinkels das vorstehende Teil (70) am Spindelgehäuse (64) anschlägt, wodurch ein mechanischer Kippanschlag gebildet ist.

15. Kippvorrichtung nach einem der Ansprüche 9 bis 14, dadurch gekennzeichnet, daß die Spindelanordnung (64) ein im wesentlichen U-förmiges Gehäuse enthält, das wenigstens zwei Halteorgane (90, 92) zur Befestigung am Fahrzeugrumpf trägt.

16. Kippvorrichtung nach Anspruch 15, dadurch gekennzeichnet, daß ein Halteorgan (90) an seinem freien Ende eine maulförmige Führung (94, 96) enthält, die zur Aufnahme einer am Fahrzeugrumpf horizontal hervorstehenden Lasche (98) geeignet ist, und daß die Führung (94, 96) und die Lasche (98) miteinander korrespondierende Bohrungen (100) zur Aufnahme eines Verbindungsbolzens aufweisen.

17. Kippvorrichtung nach Anspruch 15 oder 16, dadurch gekennzeichnet, daß ein weiteres Halteorgan (92) eine mit dem Spindelgehäuse (64) verschweißte U-förmige Schiene ist, deren freies Ende mit dem Fahrzeugrumpf verschraubbar ist.

18. Kippvorrichtung nach einem der Ansprüche 9 bis 17, dadurch gekennzeichnet, daß die Spindelanordnung (64) eine nach oben weisende Stützstrebe (110) trägt, deren oberes freies Ende am Fahrzeugkabinenrahmen in der Nähe eines Scharniers (34) festlegbar ist und deren wirksame Länge vorzugsweise einstellbar ist, wobei das obere Ende der Stützstrebe (110) ein senkrecht ausgerichtetes Gewinde aufweist, in das ein Bolzen einschraubbar ist, der sich am Fahrzeugkabinenrahmen abstützt.

19. Kippvorrichtung nach einem der Ansprüche 9 bis 18, dadurch gekennzeichnet, daß die Spindelanordnung (64) auf der der Kippachse (32) gegenüberliegenden Seite des Fahrzeuges eine Handkurbel (76) trägt, die vorzugsweise über den Fahrzeugrumpf hervorsteht.

## Claims

1. Motor vehicle, particularly a motor vehicle for use in agriculture or civil engineering, with a vehicle cab (24) disposed in the region above the rear axle (14), and whose lower region is situated partly between the rear wheels (16) and covers at least part of the power train, characterised in that the vehicle cab (24), after removal of a rear wheel, is tiltable towards the side of the removed rear wheel about a tilting axis (32) extending approximately parallel to the longitudinal axis of the vehicle.

2. Motor vehicle according to claim 1, characterised in that the maximum tilting angle through which the vehicle cab (24) is tiltable out of its operational position, has a value between 60° and 110°, preferably 90°.

3. Motor vehicle according to claim 1 or 2, characterised in that the tilting axis (32) extends approximately along one of the two lateral lower side edges of the vehicle cab (24), and is preferably defined by at least two hinges (34), each of which connects the vehicle body with the vehicle cab (24).

4. Motor vehicle according to claim 3, characterised in that the hinges (34) are located in the region of the damping members (27) disposed between the vehicle body and the vehicle cab (24), and preferably each have a hinge bolt (40) which is removable for driving operations.

5. Motor vehicle according to one of claims 1 to 4, characterised in that the vehicle steering is transmitted hydraulically through flexible hoses (44).

6. Motor vehicle according to one of claims 1 to 5, characterised in that the transmission elements connecting the indicating and operative elements in the vehicle cab (24) with the units on the vehicle body are flexible, or movable in design so that tilting is possible without separation of the transmission elements, and in that the transmission elements extend between the vehicle body and the vehicle cab (24) approximately via the tilting axis (32).

7. Motor vehicle according to one of claims 1 to 6, characterised in that the tilting axis (32) extends on the right-hand side of the vehicle.

8. Motor vehicle according to one of claims 1 to 7, characterised in that a tilting device (62) according to one of claims 9 to 19 may be mounted on the vehicle.

9. Tilting device for tilting the vehicle cab, especially for vehicles according to one of claims 1 to 8, characterised in that a spindle arrangement (64) rigidly attachable beneath the vehicle cab (24) transversely to the vehicle's longitudinal axis, a portion (70) attachable to the vehicle cab (24) and projecting outwards beyond the tilting axis (32), and a connecting piece (72) are provided, the connecting piece (72) connecting the free end (102) of the projecting portion (70) and the spindle nut (74) together in an articulated fashion.

10. Tilting device according to claim 9, characterised in that it is attachable to the vehicle, relative to the vehicle's longitudinal axis, to the forward end of the cab approximately level with the front tilting hinge (34).

11. Tilting device according to claim 9 or claim 10, characterised in that there is provided as a connecting piece (72) a portion belonging to the conventional operational equipment of the vehicle, preferably the upper guide rod of a vehicle with three-point hitch.

12. Tilting device according to one of claims 9 to 11, characterised in that the projecting portion (70) is a spar which may be mounted laterally on the vehicle cab (24) and projecting approximately horizontally outwards beyond the vehicle cab (24), said spar having an external profile which may be inserted into a correspondingly profiled recess in the cab frame.

13. Tilting device according to claim 14, characterised in that a bolt (108) is provided, which may be inserted through a bore in the cab cross beam and into a corresponding bore in the spar (70), in order to secure the spar (780) to the vehicle cab (24).

14. Tilting device according to one of claims 9 to 13, characterised in that the position and length of the spindle casing (64) and projecting portion (70) are so selected that, upon reaching the maximum acceptable tilting angle, the projecting portion (70) abuts against the spindle casing (64), a mechanical tilt stop being thereby produced.

15. Tilting device according to one of claims 9 to 14, characterised in that the spindle arrangement (64) includes a substantially U-shaped casing which carries at least two retaining means (90, 92) for attachment to the vehicle body.

16. Tilting mechanism according to claim 15, characterised in that a retaining means (90) includes on its free end a mouth-shaped guide (94, 96) suitable for accommodating a lug (98) projecting horizontally from the vehicle body, and in that the guide (94, 96) and the lug (98) have bores (100) corresponding to one another for receiving a connecting bolt.

17. Tilting device according to claim 15 or 16, characterised in that a further retaining means (92) is a U-shaped rail welded to the spindle casing (64), the free end of said rail being capable of being screwed to the vehicle body.

18. Tilting device according to one of claims 9 to 17, characterised in that the spindle arrangement (64) carries an upwardly-oriented support spar (110) whose upper free end is attachable to the vehicle cab frame in the vicinity of a hinge (34), and whose effective length is preferably adjustable, the upper end of the support spar (110) having a perpendicularly-oriented thread into which there may be screwed a bolt which is supported on the vehicle cab frame.

19. Tilting device according to one of claims 9 to 18, characterised in that the spindle arrangement (64) carries on the side of the vehicle opposite the tilting axis (32) a hand crank (76), which preferably projects beyond the vehicle body.

## Revendications

1. Véhicule à moteur, notamment véhicule agricole ou à usage agricole, avec une cabine de conduite (24) disposée dans la région située au-dessus de l'essieu arrière (14) et dont la partie inférieure se trouve partiellement entre les roues arrière (16) et recouvre au moins une partie de l'ensemble de transmission, **caractérisé** en ce que la cabine de conduite (24) peut, après avoir déposé une roue arrière, être basculée du côté de la roue arrière déposée, autour d'un axe de basculement (32) s'étendant approximativement parallèlement à l'axe longitudinal du véhicule.

2. Véhicule à moteur selon la revendication 1, **caractérisé** en ce que l'angle maximal de basculement, duquel peut être basculée la cabine de conduite (24) à partir de sa position d'utitilisation, a une valeur comprise entre 60° et 110°, de préférence égale à 90°.

3. Véhicule à moteur selon la revendication 1 ou 2, **caractérisé** en ce que l'axe de basculement (32) s'étend approximativement le long d'un des deux bords latéraux inférieurs de la cabine de conduite (24) et est de préférence défini par au moins deux charnières (34), qui relient chacune la cabine de conduite (24) au châssis du véhicule.

4. Véhicule à moteur selon la revendication 3, **caractérisé** en ce que les charnières (34) se trouvent dans la région des organes d'amortissement (27) disposés entre le châssis du véhicule et la cabine de conduite (24), et présentent chacune, de préférence, un axe de charnière (40) qui peut être déposé pour l'utilisation du véhicule.

5. Véhicule à moteur selon l'une quelconque des revendications 1 à 4, **caractérisé** en ce que la direction du véhicule est transmise hydrauliquement par des tuyaux souples (44).

6. Véhicule à moteur selon l'une quelconque des revendications 1 à 5, **caractérisé** en ce que les éléments de transmission, qui relient les éléments indicateurs et de manoeuvre présents dans la cabine de conduite (24) aux organes qui se trouvent sur le châssis du véhicule, sont réalisés flexibles ou mobiles de façon à permettre un basculement sans séparer les éléments de transmission, et en ce que les éléments de transmission s'étendent, entre le châssis du véhicule et la cabine de conduite (24), approximativement sur l'axe de basculement (32).

7. Véhicule à moteur selon l'une quelconque des revendications 1 à 6, **caractérisé** en ce que l'axe de basculement (32) s'étend sur le côté droit du véhicule.

8. Véhicule à moteur selon l'une quelconque des revendications 1 à 7, **caractérisé** en ce qu'on peut monter sur le véhicule un dispositif de basculement (62) selon l'une quelconque des revendications 9 à 19.

9. Dispositif de basculement pour faire basculer la cabine de conduite, notamment pour des véhicules selon l'une quelconque des revendications 1 à 8, **caractérisé** en ce que sont prévus un mécanisme à vis et écrou (64), pouvant être fixé rigidement au châssis du véhicule transversalement à l'axe longitudinal du véhicule, en dessous de la cabine de conduite (24), un élément (70) dépassant vers l'extérieur au-delà de l'axe de basculement (32) et pouvant être fixé à la cabine de conduite (24), ainsi qu'un élément de liaison (72), l'élément de liaison (72) reliant mutuellement, de manière articulée, l'extrémité libre (102) de l'élément en saillie (70) et l'écrou de vis (74).

10. Dispositif de basculement selon la revendication 9, **caractérisé** en ce que ce dispositif peut être fixé sur le véhicule à l'extrémité avant de la cabine, par rapport à l'axe longitudinal du véhicule, environ à hauteur de la charnière de basculement avant (34).

11. Dispositif de basculement selon la revendication 9 ou 10, **caractérisé** en ce qu'est prévu comme élément de liaison (72) une pièce faisant partie de l'équipement utilitaire habituel du véhicule, par exemple le bras oscillant supérieur d'un véhicule équipé d'un dispositif d'attelage en trois points.

12. Dispositif de basculement selon l'une quelconque des revendications 9 à 11, **caractérisé** en ce que l'élément en saillie (70) est un montant qui peut être monté latéralement sur la cabine de conduite (24), qui dépasse approximativement horizontalement vers l'extérieur de la cabine de conduite (24) et qui présente un profil extérieur pouvant être emboîté dans un évidement de profil correspondant pratiqué dans le bâti de la cabine.

13. Dispositif de basculement selon la revendication 14, **caractérisé** en ce qu'est prévu un axe (108) qui, en passant par un perçage pratiqué dans la traverse de cabine, peut être enfilé dans un perçage correspondant pratiqué dans le montant (70), afin de fixer le montant (70) à la cabine de conduite (24).

14. Dispositif de basculement selon l'une quelconque des revendications 9 à 13, **caractérisé** en ce que la position et la longueur du carter de vis (64) et de l'élément en saillie (70) sont choisies de telle sorte que l'élément en saillie (70) vient buter contre le carter de vis (64) à l'atteinte de l'angle de basculement maximal admissible, formant ainsi une butée de basculement mécanique.

15. Dispositif de basculement selon l'une quelconque des revendications 9 à 14, **caractérisé** en ce que le mécanisme à vis et écrou (64) comporte un carter sensiblement en forme de U, qui porte aux moins deux organes de fixation (90, 92) pour la fixation au châssis du véhicule.

16. Dispositif de basculement selon la revendication 15, **caractérisé** en ce qu'un organe de fixation (90) comporte à son extrémité libre un guidage en forme de mâchoire (94, 96), qui est apte à recevoir une patte (98) dépassant horizontalement du châssis du véhicule, et en ce que le guidage (94, 96) et la patte (98) présentent des perçages (100) mutuellement correspondants, pour recevoir un axe d'assemblage.

17. Dispositif de basculement selon la revendication 15 ou 16, **caractérisé** en ce qu'un autre organe de fixation (92) est un profilé en U, qui est soudé au carter de vis (64) et dont l'extrémité libre peut être boulonnée sur le châssis du véhicule.

18. Dispositif de basculement selon l'une quelconque des revendications 9 à 17, **caractérisé** en ce que le mécanisme à vis et écrou (64) porte un montant de soutien (110) dirigé vers le haut, dont l'extrémité libre supérieure peut être fixée au bâti de la cabine de conduite à proximité d'une charnière (34) et dont la longueur active est de préférence réglable, l'extrémité supérieure du montant de soutien (110) présentant un filetage à orientation verticale, dans lequel peut être vissé un boulon qui s'appuie contre le bâti de la cabine de conduite.

19. Dispositif de basculement selon l'une quelconque des revendications 9 à 10, **caractérisé** en ce que le mécanisme à vis et écrou (64) porte, sur le côté du véhicule opposé à l'axe de basculement (32), une manivelle (76) qui, de préférence, dépasse du châssis du véhicule.
